# EUROPÄISCHE PATENTANMELDUNG

(11) **EP 4 467 587 A1**
(43) Veröffentlichungstag der Anmeldung: **27.11.2024**
(21) Anmeldenummer: 23175557.0
(22) Anmeldetag: 26.05.2023
(51) Int. Cl.: C08G 18/67, C08G 18/76, C08F 290/06, C08G 18/22, C08G 18/48, C08L 75/16

(54) **STABILISIERUNG VON URETHANHYBRIDHARZSYSTEMEN**

(71) Anmelder: Covestro Deutschland AG, 51373 Leverkusen (DE)
(72) Erfinder: PAVEN, Maxime, 40764 Langenfeld (DE); JANSEN, Johan Franz Gradus Antonius, 6165 AP Geleen (NL); FROEBEL, Sascha, 40591 Düsseldorf (DE); MAEKER, Sarah, 51069 Köln (DE); RAPS, Daniel, 51373 Leverkusen (DE)
(74) Vertreter: Levpat

(57) **Zusammenfassung**

Die vorliegende Erfindung betrifft ein spezielles Inhibitorpaket und seine Verwendung für die Verarbeitung von radikalisch polymerisierbaren Reaktionsmischungen zur Herstellung von Urethanhybridharzen, ein Herstellungsverfahren für Urethanhybridharze unter Verwendung dieses Inhibitorpakets, und Urethanhybridharze, welche unter Verwendung dieses Inhibitorpakets hergestellt wurden.

## Beschreibung

Die vorliegende Erfindung betrifft ein spezielles Inhibitorpaket und seine Verwendung für die Verarbeitung von radikalisch polymerisierbaren Reaktionsmischungen zur Herstellung von Urethanhybridharzen, ein Herstellungsverfahren für Urethanhybridharze unter Verwendung dieses Inhibitorpakets, und Urethanhybridharze, welche unter Verwendung dieses Inhibitorpakets hergestellt wurden.

Herstellungs-, Verarbeitungs- und Anwendungseigenschaften von Polymeren werden entscheidend durch die Auswahl ihrer Ausgangsverbindungen (Monomere) beeinflusst. Als versatile Ausgangsverbindungen eignen sich Kohlenstoff-Kohlenstoff-Doppelbindungen enthaltende ("ungesättigte") Monomere, wie z.B. Acrylat - und Methacrylatverbindungen (im Folgenden einzeln oder gemeinsam mit "(Meth)acrylaten" bezeichnet), welche dann beispielsweise durch Vermischung mit einer einen Polymerisationsinitiator enthaltenden Komponente polymerisiert werden können. In den letzten Jahren wurden für bestimmte Anwendungen, wie Beschichtungen, (Komposit)bauteile, strukturfeste Schäume und weitere, Polymere entwickelt, welche zusätzlich zu der radikalischen C-C - Verknüpfung auch über Polyadditionsverknüpfungen, insbesondere Polyurethangruppen, verfügen (hierin "Urethanhybridharze" genannt). Während der Herstellung können radikalische Polymerisation der Doppelbindungen und Polyaddition der Urethangruppen konsekutiv oder parallel ablaufen. Zum Beispiel können sogenannte "gecappte", d.h. mit ungesättigten Endgruppen versehene Polyurethanoligomere, gegebenenfalls mit Reaktivverdünnern, einer radikalischen Polymerisation unterworfen werden. Neben der Auswahl der Monomere können auch Additive, wie Inhibitoren und Stabilisatoren, bedeutenden Einfluss auf die Eigenschaften der reaktiven Formulierungsbestandteile und des resultierenden Polymers haben, wie z.B. Reaktivität und Langzeitstabilität.

Die Tendenz von ungesättigten Monomeren wie (Meth)acrylaten zur unkontrollierten radikalischen Polymerisation beeinflussen negativ ihre Lagerstabilität. Auch ist es für bestimmte Anwendungen, z.B. bei der Herstellung von großen und/oder faserverstärkten Bauteilen, notwendig, dass die reaktive Zusammensetzung nach Zusatz des Polymerisationsinitiators noch über eine lange Zeit eine niedrige Viskosität aufweist.

Daher werden in der großtechnischen Anwendung den monomeren Ausgangsverbindungen bzw. -formulierungen häufig Inhibitoren zugesetzt, welche die unkontrollierte Initiation der Polymerisation unterdrücken sollen.

Als Inhibitoren für die radikalische Polymerisation sind unter anderem Phenol-, Chinin- und gehinderte Aminverbindungen wie Polymethylpiperidinderivate, und / oder stabile radikalische Verbindungen eingesetzt. Die Verwendung phenolischen Inhibitors in Kombination mit einer radikalischen Verbindung ist, wenn überhaupt, nur im Massenverhältnis eines phenolisches Inhibitors **PI** zu einer radikalischen Inhibitorverbindung **RI** bis 1 offenbart.

WO 19/040596 A offenbart beispielsweise die Verwendung eines Inhibitorpakets, welches mindestens ein Nitroxidradikal und eine Base enthält, zur Stabilisierung einer Urethan(meth)acrylat - Harzzusammensetzung. Die Base ist ausgewählt aus der Gruppe bestehend aus tertiären Aminbasen, Alkoxiden und Hydroxiden mit einem pH-Wert in Wasser größer als 8,2. Das Nitroxidradikal ist ausgewählt aus der Gruppe bestehend aus 1-Oxyl-2,2,6,6-Tetramethylpiperidin (TEMPO), Derivaten davon und Kombinationen davon. In den erfindungsgemäßen Beispielen werden jeweils 600 ppm TEMPO mit 200 ppm der entsprechenden Base (Beispiel 1: Natriummethanolat, Beispiel 2: Triethylamin) verglichen mit Inhibitorpaketen bestehend aus A) nur 600 ppm TEMPO, B) 100 ppm TEMPO, 500 ppm Hydrochinon und 75 ppm Naphthochinon und C) 100 ppm TEMPO, 500 ppm Phenothiazin und 300 ppm Oxalsäure. Nach Herstellung des Urethan(meth)acrylats, gegebenenfalls bereits in Anwesenheit von TEMPO, wird dieses gemischt mit den restlichen Bestandteilen des Inhibitorpakets. Die anspruchsgemäßen Zusammensetzungen sollen eine verbesserte Lagerstabilität aufweisen (Verlängerung der "Induktionszeit" für die thermisch induzierte Polymerisation). Die Aushärtungseigenschaften, korreliert mit den Werten für Exothermie und Glasübergangstemperatur im DSC, sollen bei den mit einer peroxidischen Initiatormischung gestarteten Polymerisation mit denen der Zusammensetzungen gemäß Beispiel 2) und Vergleichsbeispiel A) vergleichbar sein.

Insbesondere bei der Herstellung von Urethanhybridharzen ist die Zugabe einer Base, insbesondere einer aminischen, jedoch in vielen Fällen nicht günstig, da diese unerwünschte Nebenreaktionen in der Zusammensetzung fördern und die Verarbeitungszeit verkürzen kann.

Überraschend wurde jetzt gefunden, dass ein spezielles Inhibitorpaket umfassend die Kombination eines phenolischen Inhibitors PI und einer radikalischen Inhibitorverbindung RI im massenmäßigen Verhältnis PI:RI > 1,1 eine gegenüber den aus dem Stand der Technik bekannten Systemen bessere Lagerstabilität einer Formulierung enthaltend ungesättigte Monomeren bewirkt, als auch gleichzeitig den Viskositätsanstieg bei der radikalischen Polymerisation nach Zusatz des Initiators verlangsamt, ohne die Endeigenschaften des fertig ausgehärteten Polymers negativ zu beeinflussen. Die Zugabe einer Base ist also nicht nötig. Dies vergrößert das Verarbeitungsfenster und erleichtert dadurch insbesondere die Herstellung von Beschichtungen, großen Bauteilen und Verbundbauteilen, z.B. mittels Pultrusion, Infusion von Fasergelegen etc.

Die Erfindung betrifft daher ein Inhibitorpaket zur Stabilisierung von Formulierungen enthaltend mindestens eine radikalisch polymerisierbare Verbindung, umfassend
a) einen phenolischen Inhibitor **PI** und
b) eine radikalische Inhibitorverbindung **RI,**
dadurch gekennzeichnet, dass das Massenverhältnis von PI:RI > 1,1, bevorzugt > 2 oder > 4, insbesondere 2 - 50, mehr besonders 3 - 40 und ganz besonders 4 - 30 beträgt.

Das erfindungsgemäße Inhibitorpaket ist insbesondere gut geeignet für die Herstellung von Urethanhybridharzen, insbesondere von Polyurethan-Polyacrylat-Harzen (auch "Urethanacrylatharze" genannt). Diese lassen sich durch radikalische Polymerisation von Urethanacrylaten, gegebenenfalls in Anwesenheit eines Reaktivverdünners, herstellen. Der Aufbau der Urethanstrukturen kann vor der radikalischen Polymerisation wie in WO 2007/144292 A, US 4560456 oder gleichzeitig wie in WO 2015/155195 A über eine Polyadditionsreaktion von Hydroxy - und Isocyanatgruppen erfolgen.

Die Erfindung betrifft daher ebenfalls die Verwendung dieses Inhibitorpakets zur Stabilisierung von Formulierungen enthaltend mindestens eine radikalisch polymerisierbare Verbindung, für die Herstellung von Urethanhybridharzen, das Herstellungsverfahren dieser Urethanhybridharze unter Verwendung dieses Inhibitorpakets und die Urethanhybridharze, hergestellt unter Verwendung dieses Inhibitorpakets.

Die Erfindung betrifft weiterhin zur Stabilisierung von Formulierungen B) enthaltend mindestens eine radikalisch polymerisierbare Verbindung, welche 5,1 - 1500 ppm eines Inhibitorpakets B1) umfassend
a) einen phenolischen Inhibitor **PI** und
b) eine radikalische Inhibitorverbindung **RI,**
dadurch gekennzeichnet, dass das Massenverhältnis von PI:RI > 1,1, bevorzugt > 2 oder > 4, insbesondere 2 - 50, mehr besonders 3 - 40 und ganz besonders 4 - 30 beträgt.

Insbesondere ist die radikalisch polymerisierbare Verbindung ausgewählt aus Verbindungen, die mindestens eine Kohlenstoff-Kohlenstoff-Doppelbindung enthalten.

Bevorzugt wird ein phenolischer Inhibitor PI mit einem Oxidationspotential von 0,9 - 1,5 V, mehr bevorzugt von 1 - 1,4 V eingesetzt, noch mehr bevorzugt von 1,05 - 1,3 V, besonders bevorzugt von 1,1 - 1,3 V und ganz besonders von 1,1 - 1,25 V. Insbesondere wird als phenolischer Inhibitor p-Methoxyphenol (HQME, Oxidationspotential 1,22V in Acetonitril) eingesetzt.

Die Formulierung B) enthält in einer Ausführungsform von 5 - 1000 ppm, bevorzugt von 10 - 750 ppm, ganz besonders bevorzugt von 50 - 600 ppm phenolischen Inhibitor **PI.** In einer anderen Ausführungsform enthält die Formulierung B) bevorzugt 300 - 1000 ppm, und besonders bevorzugt von 350 - 800 ppm an phenolischem Inhibitor PI.

Bei dem radikalischen Inhibitor RI handelt es sich um ein stabiles organisches Radikal. Hierunter versteht der Fachmann solche organischen Radikale, die bei Raumtemperatur in festem Zustand oder in Lösung eine Halbwertszeit von mindestens 30 Tagen, insbesondere von mindestens 12 Monaten, aufweisen. Vor allem werden stabile Kohlenstoff-Radikale, wie Triphenylmethyl-, stabile Sauerstoff-Radikale, wie Galvinoxyl-, oder stabile Stickstoff-Radikale, wie DPPH-Radikale, eingesetzt. Besonders bevorzugt wird als radikalischer Inhibitor ein stabiles Sauerstoffradikal (Oxylrest) eingesetzt, vorzugsweise ein N-Oxylrest, besonders bevorzugt werden 2,2,6,6-Tetramethylpiperidinyl-1-oxylradikale (TEMPO) oder Derivate von TEMPO eingesetzt. TEMPO und seine Derivate (z.B. in 4-Position substituierte TEMPO - Verbindungen) sind als stabile Radikale bekannt und kommerziell erhältlich.

Typischerweise ist der radikalische Inhibitor in einer Menge von 0,1 - 500 ppm, besonders bevorzugt von 0,5 - 250 ppm, mehr bevorzugt von 1 - 100 ppm und ganz besonders bevorzugt von 10 - 50 ppm in der Formulierung B) enthalten.

Die Formulierung B) enthält weiterhin eine Komponente B2), die radikalisch polymerisierbar ist und insbesondere ausgewählt ist aus Verbindungen, die Kohlenstoff-Kohlenstoff-Doppelbindungen enthalten. Die Komponente umfasst besonders bevorzugt Vinylmonomere und Derivate von Vinylmonomeren, also Verbindungen, welche aus einer polymerisierbaren Vinyl-Gruppe und einem Substituenten X bestehen, wobei X ein einziges Atom darstellen oder aus einer (gegebenenfalls ebenfalls funktionellen) Gruppe bestehen kann. "Derivate" von Vinylmonomeren bedeutet hierin Umsetzungsprodukte der Vinylmonomeren welche jedoch noch über Kohlenstoff-Kohlenstoff-Doppelbindungen verfügen.

Insbesondere sind die Verbindungen B2) ausgewählt aus einer oder mehreren Verbindungen aus der Gruppe bestehend aus
a) (substituierten) mono- und polyfunktionellen Acrylatmonomeren und ihren Derivaten, wie Acrylnitril, Acrylsäure, Methacrylsäure, Methacrylacrylat, 2-Hydroxyethylacrylat, Methylmethacrylat, Cyclohexylmethacrylat, Benyzylmethacrylat, Isopropylmethacrylat, Octylmethacrylat, Methacrylnitril, Ethyl-alpha-ethoxyacrylat, Methyl-alpha-acetaminoacrylate, Butylacrylat, 2-Ethylhexylacrylat, Phenylacrylat, Phenylmethacrylat, Acrylamid, N,N-Dimethylacrylamid, N-Butylacrylamid, Methacryloylformamid, Dimethylaminoethyl-methacrylat, Glycidylacrylat, Bisphenol-A-diacrylat, Bisphenol-A-dimethacrylat, Bisphenol-A-epoxydiacrylat, Bisphenol-A-epoxydimethacrylat, Pentaerythrittetra(meth)acrylat, Glycerintri(meth)-acrylat, Trimethylolpropantri(meth)acrylat, Bistrimethylolpropantetra(meth)-acrylat, Butandioldi(meth)acrylat, Dipropylenglykoldi(meth)acrylat, Tripropylenglykoldi(meth)acrylat, Diethylenglykoldi(meth)acrylat, Triethylenglykoldi(meth)acrylat, Hexandioldi(meth)acrylat, aliphatische und aromatische Urethan(meth)acrylate wie z.B. UDMA, Reaktionsprodukt aus 2,4,4-Trimethylhexamethylendiisocyanat und 2-Hydroxyethylmethacrylat (HEMA),
b) (substituierten) mono- und polyfunktionellen Hydroxyl(alkyl)acrylatmonomeren und ihren Derivaten, z.B. insbesondere Hydroxyethylacrylat, Hydroxyethylmethacrylat, Hydroxypropylacrylat, Hydroxypropylmethacrylat, Hydroxybutylacrylat, Hydroxybutylmethacrylat, Pentaerythritmono(meth)acrylat, Pentaerythritdi(meth)acrylat, Pentaerythrittri(meth)acrylat, Glycerinmono(meth)acrylat, Glycerinacrylat(methacrylat), Glycerindi(meth)acrylat, Trimethylolpropanmono(meth)acrylat, Trimethylolpropandi(meth)acrylat, Trimethylolpropanmono(meth)acrylat, Trimethylolpropandi(meth)acrylat, Bistrimethylolpropantri(meth)acrylat, Bistrimethylolpropandi(meth)acrylat, Bistrimethylolpropanmono(meth)acrylat, Tripropylenglykolmono(meth)acrylat, Dipropylenglykolmono(meth)acrylat, Butandiolmono(meth)acrylat, Triethylenglykolmono(meth)acrylat, Diethylenglykolmono(meth)acrylat, Hexandiolmono(meth)acrylat, Caprolactonsäure(meth)acrylat, Laktat(meth)acrylat (modifizierte) Polyol(meth)acrylate, z.B. Urethan(meth)acrylate, insbesondere Polyetherurethan(meth)acrylate, etc.
c) (substituierten) Vinylester, Vinylether, Vinylketone, etc. und ihren Derivaten wie Vinylacetat, Vinylbutyrat, Vinylformiat, Vinylmethylether, Vinylpropylether, Vinylbutylether, Vinyl-2-ethylhexylether, Vinylphenylether, Vinyl-2-methoxyethylether, Vinylmethylketon, Vinylethylketon, N-methyl-N-vinylacetamid;
d) (substituierten) Allylverbindungen und ihren Derivaten, wie Allylalkohole, Allylether, z.B. Trimethylolpropantriallylether, Trimethylolpropandiallylether, Glyoxalbis(diallylacetal) usw.,
e) (substituierten) olefinischen Polysäuren und ihren Derivaten, wie Maleinsäure, Fumarsäure, Dimethylfumarat, Dimethylmaleat;
f) (substituierten) Dienmonomeren und ihren Derivaten wie Butadien, Isopren, 1,3-Pentadien, 1,5-Hexadien, 1,7-Octadien, Polybutadien, modifizierte Polybutadiene, wie hydroxylterminierte Polybutadiene und Mischungen davon,
g) aromatischen Vinylverbindungen wie Styrol, Alpha-Methylstyrol, 2-Methylstyrol, 3-Methylstyrol, 4-Methylstyrol, 2,4-Di-methylstyrol, Ethylstyrol, Isopropylstyrol, Butylstyrol, Phenylstyrol, Cyclohexylstyrol, Benzylstyrol und ähnlichen Derivate; substituierte Styrole wie Cyanostyrol, Nitrostyrol, N,N-Dimethylamino-styrol, Acetoxystyrol, Methyl-4-Vinylbenzoat, Phenoxystyrol, p-Vinylphenyloxid
h) (substituierten) Di- und Polyvinylmonomeren wie z.B. das Divinylbenzol, Divinylsulfoxid, Divinylsulfon, Natriumvinylsulfonat, Methylvinylsulfonat, Divinyletherderivate, wie z.B. Diethylenglykoldivinylether, Triethylenglykoldivinylether.

Besonders bevorzugt umfasst die Komponente B2) einen Reaktivverdünner. Mit "Reaktivverdünner" werden im allgemeinen niedrigviskose radikalisch polymerisierbare Verbindungen verstanden, welche an der radikalischen Polymerisation teilnehmen, aber aufgrund ihrer geringen eigenen Viskosität die Harzmischung verdünnen bzw. zur Einstellung der gewünschten Anfangsviskosität der Reaktionsmischung geeignet sind. Insbesondere bevorzugt als Reaktivverdünner eingesetzt werden monomere (Meth)acrylatverbindungen, vor allem Di- und Poly(meth)acrylate oder hydroxyfunktionelle (Meth)acrylate. In einer bevorzugten Ausführungsform liegt die Hydroxylzahl des Hydroxyl(meth)acrylatmonomers zwischen 150 - 700 mg KOH/g und besonders bevorzugt 220 - 600 mg KOH/g und noch mehr bevorzugt 300 - 500 mg KOH/g, wobei die mittlere Hydroxylfunktionalität 1 - 3, besonders bevorzugt 1 - 2, noch mehr bevorzugt 1, und die mittlere olefinische Funktionalität 1 - 3, besonders bevorzugt 1 - 2, noch mehr bevorzugt 1 beträgt. Insbesondere ist das Hydroxylmethacrylatmonomer ausgewählt aus der Gruppe bestehend aus Hydroxyethylmethacrylat, Hydroxypropylmethacrylat, Hydroxybutylmethacrylat und Kombinationen davon, ganz besonders bevorzugt ausgewählt aus der Gruppe 2-Hydroxyethylmethacrylat, 2-Hydroxypropylmethacrylat, 3-Hydroxypropylmethacrylat und 4-Hydroxybutylmethacrylat.

Die Formulierung B) soll sich erfindungsgemäß für die Herstellung eines Urethanhybridharzes eignen. Urethanhybridharze enthalten C-C - Verknüpfungen und Urethanverknüpfungen. Sie lassen sich, wie oben erwähnt, auf verschiedene Weisen herstellen, wobei die Aushärtung des Harzes entweder vollständig durch die radikalische Polymerisationsreaktion oder unter Beteiligung von der radikalischen Polymerisation erfolgt. Im ersten Fall erfolgt erst die Urethanreaktion oder es werden Urethanoligomere mit radikalisch polymerisierbaren Endgruppen eingesetzt, im zweiten Fall finden Urethanreaktion und radikalische Polymerisation zumindest teilweise parallel statt.

Für die das Stabilisatorpaket B1) enthaltende Formulierung B) ergibt sich daraus, dass sie neben der mindestens einen Verbindung B2), welche über eine radikalisch polymerisierbare Gruppe verfügt, auch mindestens eine Verbindung B3) enthält, welche endständige Hydroxyfunktionen und / oder endständige Isocyanatgruppen aufweist, und/oder bei der es sich um ein Hydroxy-, Isocyanat, Acryl- oder Allyl-terminiertes Urethanoligomer handelt.

Eingesetzte Verbindungen können sowohl unter die Definition der Komponente B2) und Komponente B3) fallen, wenn sie sowohl radikalisch polymerisierbare Gruppen als auch über Urethangruppen und/oder Hydroxygruppen und/oder Isocyanatgruppen verfügen.

Bevorzugt wird eine Komponente B3) umfassend einen oder mehrere Polyhydroxypolyether (Polyetherpolyole) oder reaktive Umsetzungsprodukte von Polyetherpolyolen eingesetzt. Polyetherpolyole oder reaktive Umsetzungsprodukte (Derivate) von Polyetherpolyolen werden hierin einzeln oder gemeinsam mit "Polyetheroligomere" bezeichnet.

Polyhydroxypolyether können durch Polyaddition von Alkylenoxiden wie Propylenoxid und/oder Ethylenoxid an polyfunktionelle Starterverbindungen in Gegenwart von Katalysatoren, in einer der Person bekannten Weise hergestellt werden. Die Polyhydroxypolyether werden vorzugsweise aus einer Starterverbindung und einem oder mehreren Alkylenoxiden, beispielsweise Ethylenoxid, Butylenoxid und/oder Propylenoxid, hergestellt. Bevorzugte Starterverbindungen sind Moleküle mit 2 bis 8 Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Bisphenol A, Glycerin, Trimethylolpropan, Pentaerythrit, Sorbit und Saccharose.

Besonders bevorzugt sind 1,2- und 1,3-Propylenglykol, Diethylenglykol, Sorbit, Glycerin, Trimethylolpropan, Saccharose und Mischungen der vorstehend genannten Produkte als Ausgangsstoffe.

Besonders bevorzugt sind Polyetherpolyole auf Basis von Propylenoxid, insbesondere Propylenoxidpolyether mit einer Funktionalität von 2 - 3. Für diese Polyether sind 1,2-Propylenglykol, Glycerin und/oder Trimethylolpropan als Starterverbindung besonders geeignet.

Die Polyolkomponente B3) kann ein oder mehrere weitere Polyole enthalten, z.B. ausgewählt aus Polyesterpolyolen, Polyetheresterpolyolen, Polymerpolyolen, Polycarbonatpolyolen, Polyethercarbonatpolyolen, bzw. Derivate dieser Polyole. Polyole, welche für die Synthese von Polyurethanen eingesetzt werden können, sind aus der Fachliteratur bekannt, Präparate der Komponente B2) sind zum Beispiel im "Kunststoff-Handbuch", Band VII "Polyurethanes", 3 beschrieben. Edition, Carl Hanser Verlag, München / Wien, 1993, Seiten 57-67 beschrieben.

In einer bevorzugten Ausführungsform beträgt die mittlere Hydroxylzahl der in der Formulierung eingesetzten Polyetherpolyole vor Derivatisierung 150 - 700 mg KOH/g, besonders bevorzugt 220 - 600 mg KOH/g und die mittlere OH-Funktionalität der in B3) eingesetzten Polyole vor Derivatisierung beträgt 1,5 - 4,5, besonders bevorzugt 1,9 - 3,2, noch bevorzugt 2,2 - 2,8.

Polyesterpolyole, welche vor allem in Verbindung mit den oben beschriebenen Polyetherpolyolen eingesetzt werden, weisen vorzugsweise ein Molekulargewicht von 200 - 3000 g/mol und eine OH-Funktionalität von 2 - 6, bevorzugt 2 - 4, besonders bevorzugt 2 - 3 auf.

Die in dieser Anwendung angegebenen Werte für die Hydroxylzahl (hierin "OH-Wert") werden nach DIN EN ISO 53240, Teil 2 (11/2007) gemessen.

In dieser Anmeldung stehen die Bezeichnungen "Polyol" auch für eine Polyolmischung, "Polyetherpolyol", "Polyetheroligomer" etc. für eine Mischung aus Polyetherpolyolen, Polyetheroligomeren etc. Entsprechend bezieht sich die Angabe von Eigenschaften jeweils auf den Mittelwert der entsprechenden Komponente.

Für die Zwecke dieser Anmeldung wird der Begriff "Polyisocyanat" für eine organische Verbindung verwendet, die zwei oder mehr Isocyanatgruppen enthält (-N=C=O).

Der Begriff "Funktionalität" oder "f", wenn er in dieser Anmeldung verwendet wird, bedeutet jeweils die durchschnittliche Funktionalität bezogen auf die jeweilige funktionelle Gruppe.

Geeignete Derivate der Polyole sind z.B. deren Ester - und Urethanverbindungen, insbesondere deren Umsetzungsprodukte mit (Meth)acrylsäure, zum Beispiel (Polyetherpolyol(meth)acrylate) wie Polyethylenglykol(meth)acrylat, und / oder mit Isocyanaten (oligomere Urethane). Insbesondere bevorzugt eingesetzt werden Umsetzungsprodukte von Polyetherpolyolen und / oder Polyesterpolyolen, hydroxyfunktionellen (Meth)acrylsäure- und (Meth)acrylsäurederivaten und Isocyanaten (oligomere Urethan(meth)acrylate). Oligomere Urethan(meth)acrylate können durch sequentielle oder gleichzeitige Umsetzung der Ausgangsverbindungen hergestellt werden und verfügen je nach Verhältnis der Ausgangsverbindungen bzw. der Reaktionssequenz über endständige Hydroxyl-, Acrylat- und / oder Isocyanatgruppen.

In einer Ausführungsform enthält die Formulierung B)
B1) das erfindungsgemäße Inhibitorpaket umfassend
   a) einen phenolischen Inhibitor **PI** und
   b) eine radikalische Inhibitorverbindung **RI,**
   dadurch gekennzeichnet, dass das Massenverhältnis von **PI:RI** > 1,1, bevorzugt > 2 oder > 4, insbesondere 2 - 50, mehr besonders 3 - 40 und ganz besonders 4 - 30 beträgt,
B2) eine Komponente umfassend einen Reaktivverdünner, insbesondere ein Hydroxyalkyl(meth)acrylat und / oder ein Alkandioldi(meth)acrylat, und
B3) eine Komponente umfassend ein Polyetherpolyol, insbesondere ein Polyetherpolyol auf Basis von Propylenoxid und mit einer mittleren Hydroxylzahl von 150 - 1100 mg KOH/g oder 150 - 700 mg KOH/g, besonders bevorzugt 220 - 600 mg KOH/g und einer mittleren OH-Funktionalität von 1,5 - 6 oder 1,5 - 4,5, besonders bevorzugt 1,9 - 3,2, noch bevorzugt 2,2 - 2,8, und / oder ein Umsetzungsprodukt eines solchen Polyetherpolyols, insbesondere mit (Meth)acrylsäuren und / oder Polyisocyanaten.

Die erfindungsgemäße Formulierung B) kann dann beispielsweise durch Vermischung mit einem Polymerisationsinitiator oder mit einer einen Polymerisationsinitiator enthaltenden Komponente polymerisiert werden.

Erfindungsgemäß wird ein Harzreaktionssystem aus einer A-Komponente und einer B-Komponente zur Herstellung von Urethanhybridharzen zur Verfügung gestellt, wobei die B-Komponente die Formulierung B) umfasst, welche
- ein Stabilisatorpaket B1, enthaltend
   - einen phenolischen Inhibitor **PI** und
   - eine radikalische Inhibitorverbindung **RI,**
- eine Komponente B2), die Kohlenstoff-Kohlenstoff-Doppelbindungen enthält und radikalisch polymerisierbar ist,
- ein Polyetherpolyol und / oder ein Polyetherpolyolderivat,

dadurch gekennzeichnet, dass das Massenverhältnis von **PI:RI** > 1,1, bevorzugt > 2 oder > 4, insbesondere 2 - 50, mehr besonders 3 - 40 und ganz besonders 4 - 30 beträgt,
enthält,
und die A-Komponente mindestens einen Radikalinitiator umfasst.

Initiatoren für die radikalische Polymerisation sind beispielsweise Peroxide, Persulfide, Percarbonate, Peroxyborsäure, Azoverbindungen oder andere geeignete Radikalinitiatoren, die die Aushärtung einer olefinhaltigen Zusammensetzung initiieren können. Insbesondere bevorzugt eingesetzt werden Peroxide.

Ganz besonders bevorzugt als Radikalinitiator eingesetzt wird eine oder werden mehrere Verbindungen ausgewählt aus der Gruppe bestehend aus Monoperoxycarbonsäureestern und Monoperoxycarbonaten, bevorzugt Monoperoxycarbonsäureester, ganz besonders bevorzugt aromatische Peroxycarbonsäureester.

Die Beispiele umfassen tert.-Butylperoxyisopropylcarbonat, tert.-Butylperoxy-3,5,5-trimethylhexanoat, Methylethylketonperoxid, Cumylhydroperoxid und tert.-Butylperoxybenzoat. Besonders bevorzugt sind tert-Butylperoxybenzoat, tert-Amylperoxybenzoat und/oder tert-Amylperoxyacetat. tert-Butylperoxybenzoat ist am meisten bevorzugt.

Wird ein Radikalinitiator mit einer Peroxyester-Funktionalität zugegeben, so beträgt der Gehalt der Menge des Carbonylperoxy-Anteils [-(C=O)OO]- vorzugsweise 0,1 - 3 Gew.-%, bezogen auf 100 Gew.-% der A-Komponente, wobei 0,1 - 2 Gew -% besonders bevorzugt sind. Besonders vorteilhaft ist die Zugabe von 1 - 3 Gew.-% t-Butylperoxybenzoat.

Die A-Komponente enthält weiterhin bevorzugt reaktive Verbindungen, die mit Bestandteilen der B-Komponente zu dem Urethanhybridharz reagieren. In einer bevorzugten Ausführungsform enthält die A-Komponente ein Polyisocyanat, welches bei Vermischen mit der Formulierung B) mit freien Hydroxylgruppen in der B-Komponente unter Bildung eines Polyurethans reagiert (Polyaddition). Die Polyaddition unter Bildung von Urethangruppen und die radikalische Polymerisation der Kohlenstoff-Kohlenstoff-Doppelbindungen verlaufen dann parallel oder teilweise parallel.

Als Polyisocyanat können je nach Zielanwendung die in der Polyurethanchemie bekannten aliphatischen, cycloaliphatischen und insbesondere aromatischen Di- und/oder Polyisocyanate eingesetzt werden. Beispiele für solche Polyisocyanate, die geeignet sind, sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, Bis(4,4'-isocyanatocyclohexyl)methan oder Mischungen davon mit den anderen Isomeren, 1,4-Cyclohexylendiisocyanat, 1,4-Phenylendiisocyanat, 2,4- und/oder 2,6-Toluoldiisocyanat (TDI), 1,5-Naphthalindiisocyanat, 2,2'- und/oder 2,4'- und/oder 4,4'-Diphenylmethandiisocyanat (monomeres MDI, mMDI), höhere Homologe (oligomere MDI), Mischungen aus monomerem und oligomerem MDI (polymeres MDI, pMDI), 1,3- und/oder 1,4-Bis-(2-isocyanato-prop-2-yl)-benzol (TMXDI), 1,3-Bis-(isocyanatomethyl)benzol (XDI). Bevorzugt wird als Isocyanat Diphenylmethandiisocyanat (MDI) und insbesondere Mischungen aus Diphenylmethandiisocyanat und Polyphenylenpolymethylenpolyisocyanat (pMDI) eingesetzt. Die Mischungen aus Diphenylmethandiisocyanat und Polyphenylenpolymethylenpolyisocyanat (pMDI) weisen einen bevorzugten Monomergehalt von 10 bis 100 Gew.%, bevorzugt von 20 bis 80 Gew.%, besonders bevorzugt von 30 bis 60 Gew.% auf. Der NCO-Gehalt des eingesetzten Polyisocyanats [gemessen nach DIN EN ISO 14896:2009-07] sollte vorzugsweise größer als 23 Gew.%, besonders bevorzugt größer als 26 Gew-%, besonders bevorzugt größer als 30 Gew.% sein. Die Funktionalität des Isocyanats sollte vorzugsweise 2,0 - 3,5, besonders bevorzugt 2,1 - 2,9 betragen. Die Viskosität des Isocyanats sollte vorzugsweise ≤750 mPa*s (bei 25°C), besonders bevorzugt ≤500 mPa*s (bei 25°C) und besonders bevorzugt ≤ 300 ≤ mPa*s (bei 25°≤C) [gemessen nach DIN 53019-1:2008-09] betragen. Bei Verwendung im Rahmen der Erfindung kann das organische Polyisocyanat Dimere, Trimere, Tetramere oder Pentamere des Isocyanats oder eine Kombination davon umfassen.

Modifizierte, verschlossene und vorpolymerisierte Isocyanate, die beispielsweise durch Reaktion einer übermäßigen Menge eines organischen Polyisocyanats oder einer Mischung organischer Polyisocyanate mit einer Polyolverbindung hergestellt werden können, können eingesetzt werden. Verbindungen und Verfahren zur Herstellung sind in der Fachliteratur beschrieben.

Der Isocyanat-Index ("Index" (100 NCO/OH) im erfindungsgemäßen Harzreaktionssystem aus den Komponenten A) und B), berechnet aus dem molaren Verhältnis zwischen reaktiven NCO ("NCO") - und Zerewitinoff-aktiven Wasserstoffen ("OH") in den Ausgangsverbindungen, beträgt vorzugsweise 0,8 - 1, 5 und insbesondere 0,95 - 1,1.

Katalysatoren für die Urethanbindungsbildung, welche entweder der A-Komponente oder B) des erfindungsgemäßen Harzreaktionssystems zugegeben werden, sind beispielsweise Aminkatalysatoren, metallorganische Katalysatoren oder ein Gemisch davon.

Außerdem kann die Reaktionsmischung in der A-Komponente und/oder B-Komponente Verbindungen enthalten, die als radikalischer Polymerisationsbeschleuniger wirken können. Die dem Fachmann bekannte Gruppe der Reaktionsbeschleuniger umfasst z.B. Übergangsmetall-basierte Salze (z.B. auf Basis von Platin, Mangan, Zinn, Kupfer, Kobalt oder Eisen), aminbasierte Verbindungen, Ammoniumsalze und Anilinverbindungen. Die meisten der in der Literatur offenbarten Verbindungen fördern oder katalysieren sowohl die Urethan-Polyaddition als auch die radikalische Polymerisation. Häufig enthalten die Reaktionsbeschleuniger für die radikalische Polymerisationsreaktion Gemische der vorgenannten Verbindungen. In einer bevorzugten Ausführungsform enthält die A-Komponente einen Übergangsmetallkatalysator, insbesondere ausgewählt aus der Gruppe der Fe-, Mn-, Co-, Cu-Salze oder -Komplexe, vorzugsweise ein Co-Salz oder -Komplex.

In einer weiteren bevorzugten Ausführungsform enthalten weder die B-Komponente noch die A-Komponente katalytisch wirksame Amine, Ammoniumsalze oder Kaliumcarboxylate.

Die Harzzusammensetzung aus A- und B-Komponente eignet sich insbesondere zur Herstellung von Polyurethan(meth)acrylharzen.

Ein bevorzugtes Harzreaktionssystem zur Herstellung von Urethanhybridharzen, umfasst eine B-Komponente enthaltend die Formulierung B aus
- einem Stabilisatorpaket B1, enthaltend
   - einen phenolischen Inhibitor **PI** und
   - eine radikalische Inhibitorverbindung **RI,**
- einer Komponente B2), die Kohlenstoff-Kohlenstoff-Doppelbindungen enthält und radikalisch polymerisierbar ist, und
- einem Polyetheroligomer B3),

wobei das Massenverhältnis von **PI:RI** > 1,1, bevorzugt > 2 oder > 4, insbesondere 2 - 50, mehr besonders 3 - 40 und ganz besonders 4 - 30 beträgt,
und die A-Komponente, welche mindestens einen Radikalinitiator umfasst.

In einer ersten Ausführungsform des erfindungsgemäßen Harzreaktionssystems enthält B1) einen phenolischen Inhibitor PI mit einem Oxidationspotential von 1 - 1,4 V, besonders bevorzugt von 1,05 - 1,3 V, besonders bevorzugt von 1,1 - 1,25 V, insbesondere wird als phenolischer Inhibitor p-Methoxyphenol eingesetzt.

Die B-Komponente enthält dabei in einer Ausführungsform von 5-1000 ppm, bevorzugt von 10 - 750 ppm, ganz besonders bevorzugt von 50 - 600 ppm des phenolischen Inhibitor PI. In einer anderen Ausführungsform enthält die Formulierung B) bevorzugt 300 - 1000 ppm, und besonders bevorzugt von 350 - 800 ppm an phenolischem Inhibitor PI.

Das Harzreaktionssystem der oben beschriebenen Ausführungsformen enthält als radikalische Inhibitorverbindung **RI** bevorzugt ein N-Oxyl-Radikal, insbesondere TEMPO oder ein Derivat von TEMPO. Typischerweise ist der radikalische Inhibitor in einer Menge von 0,1 - 500 ppm, besonders bevorzugt von 0,5 - 250 ppm, mehr bevorzugt von 1 - 100 ppm und ganz besonders bevorzugt von 10 - 50 ppm in der Formulierung B) enthalten.

Die A-Komponente des Harzreaktionssystems enthält bevorzugt ein Polyisocyanat, insbesondere bevorzugt monomeres, oligomeres und / oder polymeres MDI.

Die B-Komponente des Harzreaktionssystems enthält bevorzugt Methacrylat-Reaktivverdünner, vorzugsweise ein hydroxyfunktionelles Methacrylat, ganz besonders bevorzugt ausgewählt aus der Gruppe 2-Hydroxyethylmethacrylat, 2-Hydroxypropylmethacrylat, 3-Hydroxypropylmethacrylat und 4-Hydroxybutylmethacrylat ist¹

In einer bevorzugten Ausführungsform enthält die A-Komponente des Harzreaktionssystems gemäß einer der oben beschriebenen Ausführungsformen ein Polyetherpolyol, vorzugsweise auf Basis von Ethylenoxid und / oder Propylenoxid und mit einer mittleren Hydroxylzahl von 150 bis 1500 mg KOH/g, bis 1200 mg KOH/g, bis 900 mg KOH/g oder bis 700 mg KOH/g, besonders bevorzugt 220 - 600 mg KOH/g und einer mittleren OH-Funktionalität von 1,5 - 6 oder 1,5 - 4,5, besonders bevorzugt 1,9 - 3,2, noch bevorzugt 2,2 - 2,8, und / oder ein Umsetzungsprodukt eines solchen Polyetherpolyols, insbesondere mit (Meth)acrylsäuren und / oder Polyisocyanaten, insbesondere ein oligomeres Polyetherurethanacrylat.

Gegebenenfalls können die erfindungsgemäßen Harzreaktionssysteme auch weitere Hilfsmittel oder Additive enthalten, einschließlich, aber nicht beschränkt auf, Füllstoffe, innere Formtrennmittel, Flammschutzmittel, Rauchinhibitoren, Farbstoffe, Pigmente, Antistatika, Antioxidantien, UV-Stabilisatoren, Verdünnungsmittel, Entschäumer, Haftvermittler, Oberflächennetzmittel, Verlaufsmittel, Wasserfänger, Katalysatoren, Molekularsiebe, thixotrope Mittel, Weichmacher, Schaumbildner, Treibmittel, Schaumstabilisatoren, oder Kombinationen davon. Diese Komponenten können gegebenenfalls in einer oder beiden der oben beschriebenen Komponenten der vorliegenden Erfindung enthalten sein. Diese Zusatzstoffe können auch unabhängig voneinander als eine weitere Komponente gelagert werden und zu einem beliebigen Zeitpunkt den Komponenten oder dem Reaktionssystem zugegeben werden.

Das Harzreaktionssystem gemäß einer oder mehrerer der oben beschriebenen Ausführungsformen kann zu einem erfindungsgemäßen Urethanhybridharz umgesetzt werden. Das erfindungsgemäße Urethanhybridharz enthält C-C-Verknüpfungen und Urethanstrukturen und zeichnet sich weiterhin durch die Anwesenheit des erfindungsgemäßen Stabilisatorpakets B1) aus.

Insbesondere handelt es sich bei dem Urethanhybridharz um ein Urethan(meth)acrylatharz, ganz besonders bevorzugt enthält das Urethanhybridharz Poly(meth)acrylatstrukturen und Polyetherurethanstrukturen, sowie
- das Stabilisatorpaket B1), enthaltend
   - einen phenolischen Inhibitor **PI,** bevorzugt umfassend einen phenolischen Inhibitor PI mit einem Oxidationspotential von 1 - 1,4 V und
   - eine radikalische Inhibitorverbindung **RI,** bevorzugt umfassend TEMPO oder ein TEMPO-Derivat,
   dadurch gekennzeichnet, dass das Massenverhältnis von **PI:RI** > 1,1, bevorzugt > 2 oder > 4, insbesondere 2 - 50, mehr besonders 3 - 40 und ganz besonders 4 - 30 beträgt.

Zur Herstellung der erfindungsgemäßen Urethanhybridharze werden A- und B-Komponente miteinander vermischt, nach bekannten Verfahren weiterverarbeitet und ausgehärtet. Es kann vorteilhaft sein, die Ausgangsprodukte vor Einsatz mit Hilfe von dem Fachmann bekannten geeigneten Methoden zu trocknen. Die Aushärtung findet vorzugsweise unter erhöhter Temperatur statt.

Das erfindungsgemäße Urethanhybridharzsystem eignet sich insbesondere zur Beschichtung und Herstellung von (Komposit)Bauteilen und Verbundwerkstoffen, z.B. mittels (Vakuum)infusion (VARTM), Pultrusion, Prepreg-Molding, Filament-Winding, Hand-Lay-up-Moulding, Spray-Lay-up-Moulding.

Zur Herstellung von faserverstärkten Verbundwerkstoffen eignen sich anorganische und organische Fasern, insbesondere Glasfasern, Kohlenstofffasern (Carbonfasern), Keramikfasern, Polymerfasern, z.B. Nylonfasern, Aramidfasern, Borfasern, Stahlfasern, Naturfasern.

Die Verwendung eines Kernmaterials in Kombination mit der Urethanhybridharzreaktivsystem und einem Verstärkungsmaterial erleichtert das Formen des Verbundwerkstoffs und die Gewichtsreduzierung des Verbundwerkstoffs. Ein Kernmaterial, das üblicherweise auf dem Gebiet verwendet wird, kann für das erfindungsgemäße Urethanhybridharz-Verbundmaterial verwendet werden, beispielsweise ein Polystyrolschaum Polyester-PET-Schaum; Polyimid-PMI-Schaum; Polyvinylchloridschaum; Metallschäume, Balsaholz; und dergleichen.

Ein bevorzugtes Verfahren zur Herstellung des Urethanhybridharz - Verbundwerkstoffs, umfassend insbesondere eine Matrix aus einem Polyurethan-Polymethacrylat-Harz in Kombination mit dem Verstärkungsmaterial, ist das Vakuuminfusionsverfahren, auch vakuumunterstütztes Harztransfergießen (VARTM) genannt.

Der erfindungsgemäß hergestellte Verbundwerkstoff eignet sich beispielsweise zur Herstellung von Windrotorblättern, Windgeneratorgehäusen, Wasserfahrzeugpropellerblättern, Rümpfen, Innen- und Außendekorationsteilen von Automobilen, Automobilkarosserien, Radomen, Maschinenbauteilen, Zierteilen und Strukturelementen für Architekturen und Brücken.

### Beispiele

Folgende Rohstoffe wurden eingesetzt:
MDI: Isocyanat auf Basis von Diphenylmethan-4,4'-diisocyanat mit Isomeren und höherfunktionellen Homologen mit einem NCO-Gehalt von 30,5 - 32,5 Gew.-% und einer Viskosität von ca. 160 - 240 mPa*s bei 25 °C, erhältlich von der Covestro Deutschland AG.
PE: ein trifunktionelles Polyetherpolyol mit einer Hydroxylzahl von 430 - 470 mg KOH/g und einer Viskosität von ca. 370 - 430 mPa*s bei 25 °C, erhältlich von der Covestro Deutschland AG.
HPMA: Hydroxpropylmethacrylat (Meracryl^{®} HPMA98) wurde von der Röhm GmbH bezogen.
ACC: Beschleuniger auf Cobaltbasis (Accelerator^{™} NL-49PN), Nouryon Functional Chemicals BV
PEROXID: Trigonox^{®} C, ein organisches Peroxid, Nouryon Fuctional Chemicals BV
HQME: p-Methoxyphenol, Merck KGaA
TEMPO: 2,2,6,6-Tetramethylpiperidinyloxyl Merck KGaA
NaOMe-Lsg.: Natriummethanolat (30%ige methanolische Lösung) Merck KGaA

### 1. Herstellung und Lagerstabilität von Polyol - und Acrylat-haltigen Formulierungen

Durch Vermischen der Ausgangsstoffe (Zusammensetzung siehe Tabelle 1) wurden nicht erfindungsgemäße und erfindungsgemäße Formulierungen B-1 bis B-5 hergestellt:

| **Komponenten** | **Einheit** | **B-1*** | **B-2*** | **B-3*** | **B-4** | **B-5*** |
|---|---|---|---|---|---|---|
| PE | Gew-% | 49,80 | 49,80 | 49,80 | 49,80 | 49,73 |
| HPMA | Gew-% | 50,00 | 50,00 | 50,00 | 50,00 | 50,00 |
| ACC | Gew-% | 0,20 | 0,20 | 0,20 | 0,20 | 0,20 |
| NaOMe-Lsg.(NaOMe) | Gew-% (ppm) | | | | | 0,07 (200) |
| TEMPO | ppm | 0 | 0 | 100 | 100 | 600 |
| HQME | ppm | 0 | 500 | 0 | 500 | 0 |
| Lagerstabilität | d | 2 | 3 | 16 | 25 | >30 |

| | | | | | | |
|---|---|---|---|---|---|---|
| * Vergleichsbeispiele | | | | | | |

Die Lagerstabilität (Alterung) dieser Formulierungen bestehend aus Polyol, Acrylat, Beschleuniger mit und ohne zusätzliches HQME bzw. TEMPO wurde wie folgt untersucht:
Es wurden jeweils 25 g der Formulierungen B1 - B5 in 40 ml Schraubdeckelgläser gefüllt und verschlossen. Über den Formulierungen befand sich Luft und die Proben wurden zur Beschleunigung der Alterung in einem Trockenschrank bei 120 °C aufbewahrt. In regelmäßigen Zeitintervallen wurden die Proben begutachtet. Die Lagerstabilität wurde anhand der Zeitdauer bis zur Polymerisation der Formulierungen B1 - B5 bestimmt, was anhand des Beginns der Verfestigung der Flüssigkeit (Ausfall von Polymer) zu erkennen war.

Der Formulierung B1 wurde kein Inhibitorpaket zugesetzt und die Flüssigkeit polymerisierte bereits nach 2 Tagen bei 120 °C. Durch die Zugabe von 500 ppm HQME konnte der Zeitpunkt der Polymerisation um einen weiteren Tag auf 3 Tage verzögert werden (Formulierung B2). Wurden statt HQME 100 ppm TEMPO zugegeben, so fand die Polymerisation erst nach 16 Tagen statt (Formulierung B3). Überraschenderweise wurde gefunden, dass die Kombination von 100 ppm TEMPO und 500 ppm HQME in Formulierung B4 zu einer deutlichen Stabilisierung führt und eine Polymerisation erst nach 25 Tagen bei 120 °C beobachtet wird, was aus der Kombination der Formulierung B2 und B3 nicht zu erwarten gewesen wäre. Formulierung B5 dient als weiteres Vergleichsbeispiel (gegenüber Anmeldung WO 19/040596 A). In diesem Fall führt die Kombination von 600 ppm TEMPO und 200 ppm Natriummethanolat ebenfalls zu einer guten Verbesserung der Lagerstabilität bei 120 °C.

### 2. Beispiele R-1 bis R-5: Herstellung von Urethanmethacrylatharzen und Bestimmung der Gelzeit

A-Komponente: MDI und PEROXID (Mengen gemäß Tabelle 2) wurden miteinander vermischt.
B-Komponente: Formulierungen B1 - B5 gemäß Tabelle 1.

Die frisch hergestellte A-Komponente und die jeweilige ebenfalls frisch hergestellte B-Komponente wurden vermischt und die Reaktivität der Urethanmethacrylatharze wurde anhand der Gelzeit untersucht. Dafür wurden 20 g der Reaktionsmischung bei Raumtemperatur 15 Sekunden miteinander vermischt und anschließend 12 g davon in ein Reagenzglas überführt. Die Zeit bis zur Polymerisation bei 60 °C wurde mittels eines Gelnorm Geltimers (PST-1) ermittelt.

Die Lagerstabilität der B-Komponente wurde wie oben beschrieben bestimmt.

**Tabelle 2: Zusammensetzung des Harzreaktionssystems und Gelzeit**

| **Reaktionssystem** | | | R-1* | R-2* | R-3* | R-4 | R-5* |
|---|---|---|---|---|---|---|---|
| **B-Komponente** | B-1 | Gew.-T | 100 | | | | |
| | B-2 | Gew.-T | | 100 | | | |
| | B-3 | Gew.-T | | | 100 | | |
| | B-4 | Gew.-T | | | | 100 | |
| | B-5 | Gew.-T | | | | | 100 |
| **A-Komponente** | MDI | Gew.-T | 102,3 | 102,3 | 102,3 | 102,2 | 102,3 |
| | PEROXID | Gew.-T | 2,00 | 2,00 | 2,00 | 2,00 | 2,00 |
| **Index** | | | 105 | 105 | 105 | 105 | 105 |
| **Gelzeit bei 60°C** | | h:min | 1:42 | 01:28 | 01:28 | 01:38 | 00:03 |
| **Lagerstabilität der B-Komponente** | | d | 2 | 3 | 16 | 25 | >30 |
| Dauer bis zur Polymerisation bei 120 °C | | | | | | | |

| | | | | | | | |
|---|---|---|---|---|---|---|---|
| *Vergleichsbeispiele | | | | | | | |

Beispiele R-1 - R-5 zeigen, dass bei Urethanacrylatharzreaktionssystemen enthaltend Natriummethanolat Lösung als Inhibitor die Reaktionsdauer der B-Komponente mit der A-Komponente in erheblichem Ausmaß verkürzt ist, was an der sehr kurzen Gelzeit von nur 3 Minuten bei 60 °C zu erkennen ist. Die Gelzeiten des Referenzsystems (R 1) und der anderen Beispiele R-2 - R-4 hingegen sind ähnlich (mehr als eine Stunde und 30 Minuten und weniger als 2 Stunden), was eine ähnliche Verarbeitung der A- und B-Komponente miteinander erlaubt.

### 3. Beispiele R-6 bis R-9: Bestimmung des Viskositätsverlauf während der Polymerisationsreaktion und Bestimmung der Aushärtung:

Analog den Beispielen R-1 bis R-5 wurden Harzreaktionssysteme hergestellt mit den Formulierungen gemäß Tabelle 3. In den Systemen wurde die zeitliche Entwicklung der Viskosität der Reaktionsmischung rheologisch und die Reaktionsenthalpie via DSC untersucht. Die Zunahme der Viskosität in den Reaktionssystemen bei konstanter Temperatur (35 °C) und als Funktion der Zeit wurde mit einem Haake Mars 40 Rheometer (ThermoFisherScientific) verfolgt. Die Messungen wurden im Rotationsmodus mit konstanter Scherrate von 5 s⁻¹ und Platte-Platte Geometrie durchgeführt (Durchmesser der oberen Platte 20 mm). Die Spaltbreite betrug 0,3 mm. Die Harzreaktionssystem wurden vor der Messung für 600 s bei Raumtemperatur entgast.

Als Maß für die Aushärtung diente die Reaktionsenthalpie der Harzreaktionssysteme R-6 bis R-9, welche durch die dynamische Differenzkalorimetrie ermittelt wurde (DSC, Gerät: Q20, TA Instruments). Dazu wurden je 5 g der entsprechenden Harzreaktionssysteme ca. 1 Minute vermischt und anschließend 15 - 20 mg in einen verschließbaren Tiegel (Tzero, Aluminium) überführt. Für jedes Beispiel wurden drei Messungen bei unterschiedlichen Heizraten (4, 8, 16 K/min) unter Stickstoffatmosphäre von 0 °C bis 220 °C durchgeführt. Diese Messungen wurden mittels der Software Kinetics Neo (NETZSCH-Gerätebau GmbH, Version 2.6.1.2) ausgewertet. Als Basislinie wurde eine Bézierkurve genutzt, welche bei 10, 20 und 30 °C für die drei entsprechenden Heizraten begann. Die Reaktionsenthalpie des jeweiligen Harzreaktionssystems entspricht dem Mittelwert der Reaktionsenthalpien aus den drei Einzelmessungen bei den beschriebenen Temperaturen.

**Tabelle 3: Bestimmung des Viskositätverlaufs und der Aushärtung**

| **Beispiele** | Einsatzstoffe | | **R-6*** | **R-7*** | **R-8*** | **R-9** |
|---|---|---|---|---|---|---|
| **B-Komponente** | PE | Gew.-T | 50,0 | 50,0 | 50,0 | 50,0 |
| | HPMA | Gew.-T | 49,8 | 49,8 | 49,8 | 49,8 |
| | ACC | Gew.-T | 0,2 | 0,2 | 0,2 | 0,2 |
| | TEMPO | ppm | 0 | 0 | 100 | 100 |
| | HQME | ppm | 0 | 400 | 0 | 400 |
| **A-Komponente** | MDI | Gew.-T | 102,3 | 102,3 | 102,3 | 102,3 |
| | PEROXID | Gew.-T | 2,0 | 2,0 | 2,0 | 2,0 |
| **Index** | | | 105 | 105 | 105 | 105 |
| **Viskositätsverlauf** | Zeit bis 1 Pa*s bei 25 °C | min | 34 | 25 | 37 | 51 |
| | Viskosität nach 15 Minuten | Pa*s | <0,1 | <0,1 | <0,1 | <0,1 |
| | Viskosität nach 30 Minuten | Pa*s | 0,4 | 4,7 | 0,3 | 0,2 |
| | Viskosität nach 45 Minuten | Pa*s | 8,9 | 84,7 | 6,3 | 0,6 |
| | Viskosität nach 60 Minuten | Pa*s | 242 | 641 | 215 | 2 |
| **Aushärtung** | Reaktionsenthalpie | J/g | 258 | 251 | 263 | 249 |

| | | | | | | |
|---|---|---|---|---|---|---|
| *Vergleichsbeispiel | | | | | | |

Beispiel R-6 enthält kein Inhibitorpaket und dient als Referenz. In diesem Beispiel erreichte die Viskosität der Mischung aus A- und B- Komponente 1 Pa*s nach 34 Minuten bei 25 °C. Beispiel R-7 (Zugabe von 400 ppm HQME) und R-8 (Zugabe von 100 ppm TEMPO) brauchten ähnlich lange bis eine Viskosität von 1 Pa*s erreicht wurde. Überraschenderweise blieb die Mischung aus A- und B- Komponente länger verarbeitbar (Beispiel R-9, 51 min bis 1 Pa*s), wenn 400 ppm HQME und 100 ppm TEMPO zugegeben wurden.

Betrachtet man die Zunahme der Viskosität als Funktion der Zeit bei 15, 30, 45 und 60 Minuten so zeigt sich, dass die Zugabe von HQME und TEMPO in Beispiel 9 sich vorteilhaft auswirkt. Im Vergleich zu den Beispielen R-6 bis R-8 erfolgte die Viskositätszunahme deutlich langsamer, was das Befüllen von Bauteilen erleichtert.

Wie beschrieben wurde die Reaktionsenthalpie per DSC bestimmt. Diese wurde im Rahmen der Messunsicherheit nicht durch die Zugabe von TEMPO und HQME beeinflusst. Damit konnte gezeigt werden konnte, dass die erfindungsgemäßen Inhibitorpakete entsprechend der Beispiele R-4 und R-8 keine nachteilige Wirkung auf die Endaushärtung des Harzreaktionssystems hat. Gleichzeitig konnte die Lagerstabilität der B-Komponente aber wesentlich erhöht werden.

## Patentansprüche

1. Inhibitorpaket zur Stabilisierung von Formulierungen enthaltend mindestens eine radikalisch polymerisierbare Verbindung, umfassend
a) einen phenolischen Inhibitor PI und
b) eine radikalische Inhibitorverbindung RI,
**dadurch gekennzeichnet, dass** das Massenverhältnis von PI:RI > 1,1 beträgt.

2. Inhibitorpaket B1) gemäß Anspruch 1, wobei RI ein N-Oxyl-Radikal, insbesondere 1-Oxyl-2,2,6,6-Tetramethylpiperidin (TEMPO) oder ein Derivat von TEMPO, ist.

3. Verwendung des Inhibitorpakets gemäß einem der Ansprüche 1 oder 2 zur Stabilisierung von Formulierungen, welche mindestens eine radikalisch polymerisierbare Verbindung enthalten, insbesondere für die Herstellung von Urethanhybridharzen.

4. Formulierung B) enthaltend mindestens eine radikalisch polymerisierbare Verbindung, bevorzugt ausgewählt aus Verbindungen mit mindestens einer Kohlenstoff-Kohlenstoff-Doppelbindung, welche 5,1 - 1500 ppm des Inhibitorpakets B1) gemäß einem der Ansprüche 1, 2 oder 3 umfasst.

5. Formulierung B) gemäß Anspruch 4, welche 5 - 1000 ppm, bevorzugt 10 - 750 ppm, ganz besonders bevorzugt 50 - 600 ppm an phenolischem Inhibitor PI enthält, und / oder welche den radikalischen Inhibitor RI in einer Menge von 0,1 - 500 ppm, besonders bevorzugt von 0,5 - 250 ppm, mehr bevorzugt von 1 - 100 ppm und ganz besonders bevorzugt von 10 - 50 ppm enthält.

6. Formulierung B) gemäß Anspruch 4 oder 5, welche die Komponente B2) Vinylmonomere und / oder Derivate von Vinylmonomeren enthält.

7. Formulierung B) gemäß Anspruch 6, wobei Komponente B2) einen Reaktivverdünner umfasst, insbesondere ausgewählt aus monomeren (Meth)acrylatverbindungen, vor allem aus der Gruppe enthaltend Di- und Poly(meth)acrylate oder hydroxyfunktionelle (Meth)acrylate.

8. Formulierung B) gemäß Anspruch 6 oder 7, wobei Komponente B2) ein hydroxyfunktionelles (Meth)acrylat ist, insbesondere mit einer Hydroxylzahl zwischen 150 - 700 mg KOH/g und besonders bevorzugt 220 - 600 mg KOH/g und noch mehr bevorzugt 300 - 500 mg KOH/g, mit einer mittleren Hydroxylfunktionalität von 1 - 3 und mit einer mittleren olefinischen Funktionalität von 1 - 3 umfasst.

9. Formulierung B) gemäß Anspruch 6, 7 oder 8, weiterhin umfassend ein Polyetheroligomer B3), insbesondere basierend auf einem Polyetherpolyol mit einer mittleren Hydroxylzahl vor Derivatisierung von 150 - 700 mg KOH/g, und einer mittleren OH-Funktionalität vor Derivatisierung von 1,5 - 4,5.

10. Harzreaktionssystem zur Herstellung von Urethanhybridharzen, umfassend eine B-Komponente enthaltend die radikalisch polymerisierbare Formulierung B) gemäß einem der Ansprüche 4 - 9 und eine A-Komponente umfassend mindestens einen Radikalinitiator.

11. Harzreaktionssystem gemäß Anspruch 10, wobei die A-Komponente weiterhin ein Polyisocyanat, insbesondere monomeres und/oder polymeres MDI enthält.

12. Urethanhybridharz, bevorzugt ein Urethan(meth)acrylatharz, erhalten aus einem Harzreaktionssystem gemäß Anspruch 10 oder 11.

13. Urethanhybridharz, bevorzugt ein Urethan(meth)acrylatharz, besonders bevorzugt ein Urethan(meth)acrylatharz enthaltend Poly(meth)acrylatstrukturen und Polyetherurethanstrukturen, **dadurch gekennzeichnet, dass** es ein Stabilisatorpaket B1), umfassend
- einen phenolischen Inhibitor PI, und
- eine radikalische Inhibitorverbindung RI, bevorzugt umfassend TEMPO oder ein TEMPO-Derivat,
enthält,
wobei das Massenverhältnis von PI:RI > 1,1, bevorzugt > 2 oder > 4, insbesondere 2 - 50, mehr besonders 3 - 40 und ganz besonders 4 - 30 beträgt.

14. (Komposit)bauteile, Beschichtungen, Verbundwerkstoffe umfassend ein Urethanhybridharz gemäß Anspruch 12 oder 13.

15. Verfahren zur Herstellung von (Komposit)bauteile, Beschichtungen, Verbundwerkstoffe umfassend ein Urethanhybridharz, **dadurch gekennzeichnet, dass**
ein Harzreaktionssystem enthaltend eine Formulierung B) gemäß Anspruch 6, 7, 8 oder 9, und eine A-Komponente enthaltend mindestens einen Radikalinitiator und gegebenenfalls ein Polyisocyanat durch Vermischen miteinander umgesetzt werden.
